# EUROPÄISCHE PATENTSCHRIFT

(11) **EP 3 404 443 B1**
(45) Veröffentlichungstag und Bekanntmachung des Hinweises auf die Patenterteilung: **21.09.2022**
(21) Anmeldenummer: 17171349.8
(22) Anmeldetag: 16.05.2017
(51) Int. Cl.: G01S 13/931, G01S 13/42, G01S 13/78, G01S 13/87, G08G 5/00, G01S 13/02, G08G 1/16, G08G 3/02, G08G 5/04, G01S 13/933

(54) **VORRICHTUNG UND VERFAHREN ZUR DETEKTION EINES VERKEHRSTEILNEHMERS**
DEVICE AND METHOD FOR DETECTING A TRAFFIC PARTICIPANT
DISPOSITIF ET PROCÉDÉ DE DÉTECTION D'UN USAGER DE LA ROUTE

(43) Veröffentlichungstag der Anmeldung: 21.11.2018
(73) Patentinhaber: HENSOLDT Sensors GmbH, 82024 Taufkirchen (DE)
(72) Erfinder: Eberle, Matthias, 89075 Ulm (DE); Mayer, Horst, 89171 Illerkirchberg (DE)
(74) Vertreter: LifeTech IP Spies & Behrndt Patentanwälte PartG mbB

(56) Entgegenhaltungen:
- WO-A2-2016/190941
- DE-A1- 10 011 263
- US-A1- 2011 285 573
- HUIZING A G ET AL: "An efficient scheduling algorithm for a multifunction radar", PHASED ARRRAY SYSTEMS AND TECHNOLOGY, 1996., IEEE INTERNATIONAL SYMPOS IUM ON BOSTON, MA, USA 15-18 OCT. 1, NEW YORK, NY, USA,IEEE, US, 15. Oktober 1996 (1996-10-15), Seiten 359-364, XP010204780, DOI: 10.1109/PAST.1996.566115 ISBN: 978-0-7803-3232-4
- W. HENRICH ET AL: "Data fusion for the new german F124 frigate concept and architecture", INFORMATION FUSION, 2003. PROCEEDINGS OF THE SIXTH INTERNATIONAL CONFERENCE OF, 1. Januar 2003 (2003-01-01), Seiten 1342-1349, XP055427453, DOI: 10.1109/ICIF.2003.177393 ISBN: 978-0-9721844-4-1

## Beschreibung

Die vorliegende Erfindung bezieht sich auf eine Vorrichtung und ein Verfahren zur Detektion eines oder mehrerer Verkehrsteilnehmer(s) und insbesondere auf eine Sensorsteuereinheit zur Reichweitenausdehnung, um sich nähernde Fahrzeuge zu detektieren.

### Hintergrund

Zum Detektieren sich nähernder Fahrzeuge (z.B. von einem eigenen Fahrzeug aus) werden je nach Anwendungsfall typischerweise mehrere verschiedene Sensortypen eingesetzt. Dabei kann grundsätzlich zwischen sogenannten kooperativen und nicht-kooperativen Sensoren unterschieden werden.

Kooperative Sensoren geben ihre Position und eventuell auch andere Daten wie Geschwindigkeit/Identifikation aktiv über entsprechende Kommunikationsgeräte bekannt (z.B. über Funk). Beispiele hierfür sind bei Luftfahrzeugen das TCAS (Traffic alert and Collision Avoidance System, engl.; Verkehrswarn- und Kollisionsvermeidungssystem) und das Nachfolgeprodukt ACAS X (Airborne Collision Avoidance System, engl.; Kollisionsvermeidungssystem für Luftfahrzeuge). Beide Systeme tauschen Daten per Transponder untereinander aus. Des Weiteren ist auch das ADS-B System (Automatic Dependent Surveillance - Broadcast, engl.; automatische Aussendung zugehöriger/abhängiger Beobachtungsdaten) ein kooperativer Sensor für Luftfahrzeuge. Für Wasserfahrzeuge hat sich AIS (Automatic Identification System, engl.; Automatisches Identifikationssystem) als Standard etabliert, um Navigations- und Positionsdaten kooperativ auszutauschen. Kommunikationsstandards für Landfahrzeuge sind momentan noch in der Entwicklung, als Beispiel kann hier der DAB-Plus Verkehrsfunk genannt werden.

Nicht-kooperative Sensoren wie z.B. ein Radar sind hingegen in der Lage sich nähernde Fahrzeuge vollkommen autonom zu detektieren. Insbesondere ist kein Einsatz irgendwelcher Kommunikationsgeräte erforderlich.

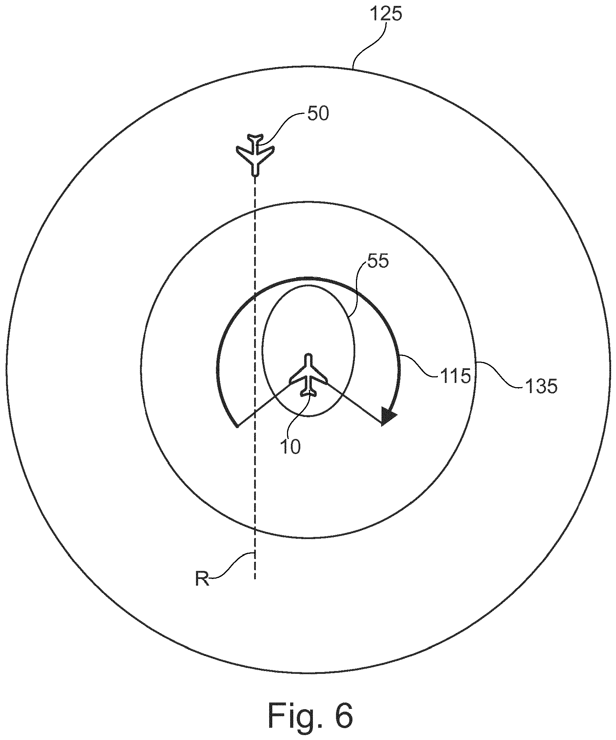

**Fig. 6** zeigt ein sogenanntes Active Electronically Scanned Array (AESA) Radar, bei dem der Suchstrahl elektronisch geschwenkt wird und die Radar-Antenne in der Fahrzeugstruktur starr oder beweglich montiert werden kann. Beispielsweise kann der Radar-Suchstrahl während eines Abtastzyklus kontinuierlich im Uhrzeigersinn geschwenkt werden, so dass die äußere Begrenzung 115 der Radar-Suchfläche zumindest einen Kollisionsvermeidungsbereich 55 umfasst, um alle nicht-kooperativen (d.h. weder mit ADS-B noch einem Transponder ausgerüsteten) beispielhaften Luftfahrzeuge zuverlässig erfassen zu können. Dies ist die Mindestanforderung an das Radar. Es können jedoch auch mögliche Radar-Ziele außerhalb des Kollisionsvermeidungsbereiches 55 erfasst werden.

Da kooperative Sensoren wie z.B. ein ADS-B aufgrund eines Systemfehlers oder eventuell auch durch einen Hackerangriff falsche Informationen liefern können, sollten die Daten dieser Sensoren mindestens durch einen weiteren unabhängigen Sensor bestätigt werden. In der WO 2016/190941 A2 ist ein mögliches Verfahren für Luftfahrzeuge zur Validierung von Sensordaten eines Sensors mit Hilfe eines zweiten Sensors beschrieben. Die dort beschriebene Validierung wird grundsätzlich immer eingeleitet, wenn sich das vom ersten Sensor detektierte Luftfahrzeug im Kollisionsvermeidungsbereich 55 befindet. Dies hat folgende Nachteile:
- Eine Bestätigung der Sensordaten für sich nähernde Luftfahrzeuge außerhalb des Kollisionsvermeidungsbereichs 55 ist damit nicht möglich. Folglich wird das Lagebild des/der Piloten außerhalb des Kollisionsvermeidungsbereichs 55 nicht verbessert. Darüber hinaus sollten die Sensordaten in diesem Fall auch nicht ohne weitere Validierung in einem automatischen/autonomen System zur Einhaltung der definierten Mindestwerte für die horizontalen und vertikalen Staffelungsabstände zwischen den Luftfahrzeugen verwendet werden.
- Der zweite Sensor muss auf jedes zu überprüfende Luftfahrzeug explizit eingewiesen werden. Er ist somit bei Ausfall des ersten Sensors nicht mehr in der Lage sich nähernde Luftfahrzeuge zu erkennen. Unter Ausfall des Sensors ist sowohl das Nichtmelden, wie auch das Melden von fehlerhaften Daten zu verstehen. In diesem Fall liegen keinerlei Daten vor und die Kollisionswarnung funktioniert nicht mehr.

- Des Weiteren ist kein Überlastungsschutz für den zweiten Sensor vorgesehen, falls die Anzahl der dem zweiten Sensor übermittelten (und zu validierenden) Positionen von sich annähernden Fahrzeugen innerhalb eines Zyklus nicht mit den zur Verfügung stehenden Leistungsreserven abgearbeitet werden kann.
- Der erste Sensor muss sich an Bord des Luftfahrzeugs befinden, was nicht immer gewährleistet werden kann. Er könnte sich auch am Boden befinden, ähnlich wie z.B. bei TIS-B (Traffic Information System - Broadcast, engl.; übertragungsbasiertes Verkehrsinformationssystem): Dort stellen Bodenstationen Positionsdaten von Luftfahrzeugen zur Verfügung, welche auf Daten von ADS-B-Bodenstationen und Radar basieren. Eine Kooperation mit diesen Systemen ist nicht vorgesehen.
- Es erfolgt keine Überwachung der Sensorperformance.

A.G. Huizing et al. "An Efficient Scheduling Algorithm for a Multifunction Radar"; Phased Array Systems and Technology, 1996, IEEE International Symposium, XP10204780,
ISBN: 0-7803-3232-6 offenbart eine Sensoranordnung mit Multifunktionsradar zur Horizontüberwachung und einen Suchradar, der den Luftraum auch in der Höhe absuchen kann, wobei das Multifunktionsradar auf eine Einweisung durch andere Sensoren in der Lage ist, die Detektionsperformance zu optimieren. W. Henrich et al.: "Data Fusion for the new German F124 Frigate Concept and Architecture"; Proceedings of the Sixth International Conference of Information Fusion, 2003; XP55427453,
ISBN: 0-9721844-4-9, offenbart eine Architektur zur Datenfusion, wobei ebenfalls auf eine Einweisung eine Optimierung der Sensorerfassung durchgeführt wird. Die beiden genannten Systeme zeigen ebenfalls zumindest einen Teil der oben genannten Probleme.

Die gegenwärtige Situation ist daher unbefriedigend und es besteht ein Bedarf nach einer Detektionsvorrichtung, die zumindest einen Teil dieser Nachteile überwindet.

### Zusammenfassung

Zumindest ein Teil der obengenannten Probleme wird durch eine Vorrichtung nach Anspruch 1, ein Kollisionsvermeidungssystem nach Anspruch 9, ein Verfahren nach Anspruch 11, und ein Computerprogrammprodukt nach Anspruch 14 gelöst. Die abhängigen Ansprüche definieren weitere vorteilhafte Ausführungsformen der vorliegenden Erfindung.

Die vorliegende Erfindung bezieht sich auf eine Vorrichtung zur Detektion eines oder mehrerer Verkehrsteilnehmer(s). Die Vorrichtung umfasst eine erste Detektionseinrichtung zum Detektieren des Verkehrsteilnehmers in einem ersten Detektionsbereich. Die erste Detektionseinrichtung ist ausgebildet, um den ersten Detektionsbereich wiederholend zu erfassen und ein Eindringen des Verkehrsteilnehmers in den ersten Detektionsbereich zu detektieren und auf eine Einweisung in einen Winkelabschnitt über den ersten Detektionsbereich hinaus in einem erweiterten ersten Detektionsbereich den Verkehrsteilnehmer zu erfassen. Die Vorrichtung umfasst weiter eine zweite Detektionseinrichtung zum Detektieren des Verkehrsteilnehmers in einem zweiten Detektionsbereich, wobei
die zweite Detektionseinrichtung zumindest einen kooperativer Sensor umfasst, der ausgebildet ist, um eine Position oder eine Einweisungsrichtung des Verkehrsteilnehmers basierend auf Daten zu erfassen, die von dem Verkehrsteilnehmer ausgesandt werden, und
die zweite Detektionseinrichtung ausgebildet ist, um ansprechend auf die Detektion des Verkehrsteilnehmers für die Einweisung erforderliche Daten über den Verkehrsteilnehmer bereitzustellen und an die erste Detektionseinrichtung zur Einweisung zu übermitteln, so dass der Verkehrsteilnehmer vor dem Eindringen in dem ersten Detektionsbereich durch die erste Detektionseinrichtung erfassbar ist. Dazu liegt der erste Detektionsbereich zumindest teilweise innerhalb des zweiten Detektionsbereiches bzw. die zweite Detektionseinrichtung hat in zumindest einem Richtungsbereich (z.B. in eine Vorausrichtung) eine deutlich größere Reichweite (z.B. mehr als doppelt oder dreimal so weit) als die erste Detektionseinrichtung.

Es versteht sich, dass Ausführungsbeispiele der vorliegenden Erfindung nicht auf einen einzigen zu detektierenden Verkehrsteilnehmer eingeschränkt werden sollen, sondern der eine Verkehrsteilnehmer immer auch einer von mehreren Verkehrsteilnehmern sein kann, die alle oder ein Teil davon zu detektieren sind. Die zur Einweisung genutzten Daten können beispielsweise eine Einweisungsrichtung zum Verkehrsteilnehmer oder eine Position des Verkehrsteilnehmers anzeigen (oder angeben) und der Winkelabschnitt kann derart gewählt werden, dass die Richtung oder die Position in dem Winkelabschnitt liegt. Das Aussenden von dem Verkehrsteilnehmer umfasst im Allgemeinen ein aktives Senden und nicht nur ein Reflektieren von Signalen. Zum Beispiel kann die zweite Detektionseinrichtung zumindest einen der folgenden Sensoren umfassen: ein ADS-B-System, einen Transponder, ein AIS-System oder ein DAB-Plus-System. Die Verwendung eines nicht-kooperativen Sensors für die zweite Detektionseinrichtung ist auch möglich.

Die erste Detektionseinrichtung kann zumindest einen nicht-kooperativen Sensor umfassen, insbesondere ein Radar mit elektronischer Strahlschwenkung, das ausgebildet ist, den Verkehrsteilnehmer unabhängig davon zu detektieren, ob der Verkehrsteilnehmer Daten aussendet.

Ausführungsbeispiele umfassen somit einweisbare Sensoren (als Teil der ersten Detektionseinrichtung), die in der Lage sind, basierend auf Einweisungsdaten gezielt Objekte zu detektieren, und zwar mit einer höheren Sensitivität oder Reichweite als ohne Einweisung. So kann die erste Detektionseinrichtung beispielsweise eine Radar-Anlage sein, die in der Lage ist, gezielt bestimmte Winkelbereiche oder Positionen in dem erweiterten ersten Detektionsbereich zu erfassen. Hierfür kann beispielsweise ein MIMO (Multiple Input Multiple Output, engl.; mehrere Empfangs- und Sendekomponenten)-Antennenarray genutzt werden, welches auf entsprechende Informationen von der zweiten Detektionseinrichtung ausgerichtet wird. Die zweite Detektionseinrichtung kann beispielsweise ein Transpondersystem sein oder eines der zuvor in dem Hintergrundabschnitt erwähnten kooperativen Sensoren sein und insbesondere ein ADS-B-System umfassen. Die Vorrichtung kann sowohl stationär als auch mobil auf einem eigenen Fahrzeug installiert sein, wobei das eigene Fahrzeug bzw. der Verkehrsteilnehmer beliebig sein kann und insbesondere ein Luftfahrzeug, ein Wasserfahrzeug oder ein Landfahrzeug umfassen kann.

Optional umfasst die Vorrichtung weiter eine Steuereinheit (z.B. eine Radar-Managementeinheit, RME), die ausgebildet ist, um zumindest eine der folgenden Funktionen bereitzustellen:
- Detektionssignale der ersten Detektionseinrichtung und/oder der zweiten Detektionseinrichtung zeitlich zu synchronisieren,
- Zuordnen von Verkehrsteilnehmern zu den erfassten Detektionssignalen,
- eine Selektion und/oder eine Datenfusion der zur Einweisung genutzten Daten vorzunehmen (z.B. wenn die zweite Detektionseinrichtung zumindest zwei verschiedene Sensoren umfasst, die unterschiedliche Sensordaten liefern);
- Auswählen von Verkehrsteilnehmern, die selektiv durch die erste Detektionseinrichtung in dem begrenzten Winkelabschnitt zu erfassen sind.

Optional kann die Steuereinheit weiter ausgebildet sein, um eine Bestimmung von einzuweisenden Kandidaten durchzuführen (z.B. als Teil des Auswählens von Verkehrsteilnehmern), wobei das Bestimmen zumindest eines aus dem Folgenden umfasst:
- Ermittlung einer Kandidatenliste für selektiv einzuweisende Kandidaten,
- Bewertung jedes Elementes aus der Kandidatenliste mit einer Kostenfunktion,
- Sortieren der Kandidatenliste basierend auf der Bewertung (z.B. top 3, 5, oder 10),
- Weitergabe, der durch die Kostenfunktion am stärksten gewichteten Kandidaten an die erste Detektionseinrichtung, um dort eine Einweisung auf die am stärksten gewichteten Kandidaten vorzunehmen.

Optional umfasst die Vorrichtung eine Warneinrichtung, die ausgebildet ist, um einen durch die erste Detektionseinrichtung in dem erweiterten ersten Detektionsbereich erfassten Verkehrsteilnehmer durch Ausgeben einer Warnung anzuzeigen. Im einfachsten Fall kann die Warnung ein Anzeigen des Verkehrsteilnehmers sein und insbesondere dann (oder nur dann) aktiviert werden, wenn eine potentielle Kollisionsgefahr besteht. Daher kann die Warneinrichtung eine Anzeige umfassen, die ausgebildet ist, um den Verkehrsteilnehmer bei einer Detektion in dem erweiterten ersten Detektionsbereich darzustellen.

Die beschriebene Technik kann auch für andere Sensortypen anstelle des beispielhaften Radars angewendet werden, zu denen zum Beispiel die Folgenden gehören:
- Optische Sensoren mit Zoomobjektiv: Das Objektiv wird auf die Position ausgerichtet die von der zweiten Detektionseinrichtung übermittelt wird und in diese Richtung wird dann gezoomt (optisch vergrößert). Zusätzlich kann die Information der zweiten Detektionseinrichtung für das Fokussieren des optischen Sensors verwendet werden.
- Infrarot Sensor mit Zoomobjektiv: Das Objektiv wird auf die Position ausgerichtet die von der zweiten Detektionseinrichtung übermittelt wird und in diese Richtung wird dann gezoomt (optisch vergrößert). Zusätzlich kann die Information der zweiten Detektionseinrichtung für das Fokussieren des optischen Sensors verwendet werden.
- Richtmikrofon: Das Mikrofon wird länger auf die von der zweiten Detektionseinrichtung übermittelte Richtung ausgerichtet, somit kann das akustische Signal länger integriert werden und das Nutzsignal hebt sich besser vom statistischen Rauschen ab.

Sofern nicht anders erwähnt, wird sich im Folgenden beispielhaft auf einen Radar-Sensor für die erste Sensoreinrichtung bezogen.

Die vorliegende Erfindung bezieht sich auch auf ein Kollisionsvermeidungssystem mit einer der zuvor beschriebenen Vorrichtungen. Das Kollisionsvermeidungssystem kann sich auf Verkehrsteilnehmer wie z.B. ein Flugzeug und/oder ein Schiff und/oder ein Landfahrzeug beziehen. Optional kann das Kollisionsvermeidungssystem basierend auf der Detektion Alternativrouten vorschlagen (z.B. in der Anzeige) und/oder autonom einleiten.

Die vorliegende Erfindung bezieht sich auch auf ein Verfahren zur Detektion eines Verkehrsteilnehmers mit einer Detektionsvorrichtung, die eine erste und eine zweite Detektionseinrichtung umfasst, wobei die erste Detektionseinrichtung in der Lage ist, einen ersten Detektionsbereich wiederholend zu erfassen und ein Eindringen des Verkehrsteilnehmers in den ersten Detektionsbereich zu detektieren. Das Verfahren umfasst die Schritte:
a) Detektieren des Verkehrsteilnehmers in einem zweiten Detektionsbereich durch eine zweite Detektionseinrichtung;
b) ansprechend auf die Detektion des Verkehrsteilnehmers, Bereitstellen von Einweisungsdaten über den Verkehrsteilnehmer;
c) Einweisen der ersten Detektionseinrichtung durch Übertragen der Einweisungsdaten an die erste Detektionseinrichtung; und
d) ansprechend auf die Einweisung, Detektieren des Verkehrsteilnehmers durch die erste Detektionseinrichtung in dem erweiterten ersten Detektionsbereich, sodass der Verkehrsteilnehmer vor dem Eindringen in den ersten Detektionsbereich durch die erste Detektionseinrichtung erfassbar ist.

Es versteht sich, dass die Schritte b) oder d) sofort auf die Detektion a) bzw. der Einweisung c) ausgeführt werden können oder erst nach einer Wartezeit oder erst dann, wenn der Verkehrsteilnehmer eine weitere Bedingung erfüllt (z.B. innerhalb eines bestimmten Bereiches oder mit einer bestimmten Geschwindigkeit sich bewegt).

Optional umfasst das Verfahren zumindest einen der folgenden Schritte:
- Synchronisieren der Detektionssignale von der ersten Detektionseinrichtung und/oder von der zweiten Detektionseinrichtung,
- Zuordnen von Verkehrsteilnehmern zu den erfassten Detektionssignalen,
- wenn die zweite Detektionseinrichtung zumindest zwei verschiedene Sensoren umfasst, die unterschiedliche Detektionsdaten liefern, Auswählen und/oder Vereinen der zur Einweisung genutzten Daten durch die zweite Detektionseinrichtung,
- Auswählen von Verkehrsteilnehmern, die selektiv durch die erste Detektionseinrichtung in einem begrenzten Winkelabschnitt zu erfassen sind.

Das Verfahren (z.B. der Schritt des Auswählens) kann zumindest einen der folgenden Schritte umfassen:
- Erstellen einer Kandidatenliste für selektiv einzuweisende Kandidaten,
- Bewerten jedes Elementes aus der Kandidatenliste mit einer Kostenfunktion,

- Sortieren der Kandidatenliste basierend auf der Bewertung,
- Weitergeben der durch die Kostenfunktion am stärksten gewichteten Kandidaten an die erste Detektionseinrichtung, um dort eine Einweisung auf diese Ziele vorzunehmen.

Das Bewerten mit der Kostenfunktion kann verschiedene Parameter der Verkehrsteilnehmer berücksichtigen, wie z.B. die Entfernung, Geschwindigkeit, Höhe, etc.

Dieses Verfahren oder zumindest Teile davon kann/können ebenfalls in Form von Anweisungen in Software oder auf einem Computerprogrammprodukt implementiert oder gespeichert sein, wobei gespeicherte Anweisungen in der Lage sind, die Schritte nach dem Verfahren auszuführen, wenn das Verfahren auf einem Prozessor läuft. Daher bezieht sich die vorliegende Erfindung ebenfalls auf ein Computerprogrammprodukt mit darauf gespeichertem Software-Code (Softwareanweisungen), der ausgebildet ist, um eines der zuvor beschriebenen Verfahren auszuführen, wenn der Software-Code durch eine Verarbeitungseinheit ausgeführt wird. Die Verarbeitungseinheit kann jede Form von Computer oder Steuereinheit sein, die einen entsprechenden Mikroprozessor aufweist, der einen Software-Code ausführen kann.

Ausführungsbeispiele bieten beispielsweise die folgenden Vorteile:
- Frühere Detektierung von fehlerhaften oder manipulierten kooperativen Kommunikationssignalen.
- Erweiterung der Radar-Reichweite zum Zwecke eines besseren Lagebilds für den Fahrzeugführer.
- Gezielte und rechtzeitige Einweisung auf Ziele im Kollisionsvermeidungsbereichs zur Erhöhung der Genauigkeit der Positions-, Geschwindigkeits- und evtl. Beschleunigungsdaten.

### Kurzbeschreibung der Figuren

Die Ausführungsbeispiele der vorliegenden Erfindung werden besser verstanden anhand der folgenden detaillierten Beschreibung und den beiliegenden Zeichnungen der unterschiedlichen Ausführungsbeispiele. Sie sollten jedoch nicht so verstanden werden, dass sie die Offenbarung der spezifischen Ausführungsformen einschränken, sondern lediglich der Erklärung und dem Verständnis dienen.
- Fig. 1: zeigt eine Vorrichtung zur Detektion von Verkehrsteilnehmern gemäß einem Ausführungsbeispiel der vorliegenden Erfindung.
- Fig. 2: veranschaulicht die Arbeitsweise von Ausführungsbeispielen mit weiteren optionalen Details.
- Fig. 3: zeigt beispielhaft ein Ausführungsbeispiel für ein RadarSteuerungssystem zur Kollisionsvermeidung mit einer integrierten Vorrichtung nach Ausführungsbeispielen.
- Fig. 4: zeigt weitere Details einer Radar-Managementeinheit des Systems aus der Fig. 3.
- Fig. 5: zeigt ein beispielhaftes Flussdiagramm für ein Verfahren zur Detektion von Verkehrsteilnehmern gemäß einem Ausführungsbeispiel der vorliegenden Erfindung.
- Fig. 6: zeigt ein konventionelles AESA-Radar, bei dem der Suchstrahl elektronisch schwenkbar ist und das in Ausführungsbeispielen genutzt werden kann.

### Detaillierte Beschreibung

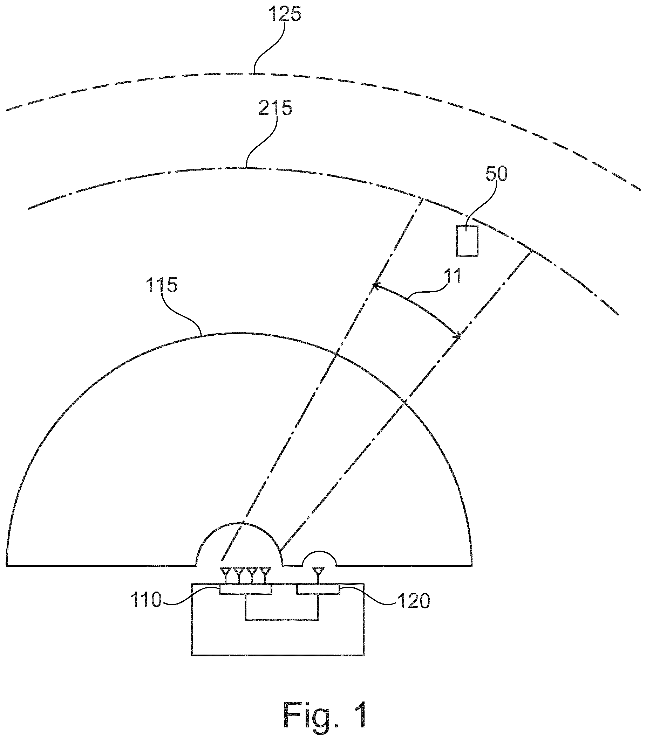

**Fig. 1** zeigt eine Vorrichtung, die zur Detektion eines oder mehrerer Verkehrsteilnehmer(s) 50 geeignet ist. Die Vorrichtung umfasst eine erste Detektionseinrichtung 110 zum Detektieren des Verkehrsteilnehmers 50 in einem ersten Detektionsbereich 115. Die erste Detektionseinrichtung 110 ist ausgebildet, um den ersten Detektionsbereich 115 wiederholend zu erfassen und ein Eindringen des Verkehrsteilnehmers 50 in den ersten Detektionsbereich 115 zu detektieren, und auf eine Einweisung in einen Winkelabschnitt 11 über den ersten Detektionsbereich 115 hinaus in einem erweiterten ersten Detektionsbereich 215 den Verkehrsteilnehmer 50 zu erfassen. Die Vorrichtung umfasst weiter eine zweite Detektionseinrichtung 120 zum Detektieren des Verkehrsteilnehmers 50 in einem zweiten Detektionsbereich 125, die ausgebildet ist, um ansprechend auf die Detektion des Verkehrsteilnehmers 50 für die Einweisung erforderliche Daten über den Verkehrsteilnehmer 50 bereitzustellen und an die erste Detektionseinrichtung 110 zur Einweisung zu übermitteln. Dadurch kann der Verkehrsteilnehmer 50 vor dem Eindringen in dem ersten Detektionsbereich 115 durch die erste Detektionseinrichtung 110 erfasst werden.

Ausführungsbeispiele erlauben somit einweisbaren Sensoren (z.B. elektronisch gesteuerten AESA Radar-Geräten, aber auch optischen oder akustischen Sensoren) während oder nach dem routinemäßigen Absuchen des beispielhaften Radar Überwachungsbereichs 115 (siehe Fig. 6), den beispielhaften Radar-Strahl selektiv (mit einen sogenannten single cued search) auf bestimmte Ziele einzuweisen.

Die gezeigte Vorrichtung kann beispielsweise Bestandteil eines Systems für Fahrzeuge sein, um sich nähernde andere Fahrzeuge 50 zu detektieren. Dem Fahrzeugführer werden dabei entsprechende Informationen zur Verfügung gestellt, um eine drohende Kollision oder weitere Annäherung mit Hilfe eines Ausweichmanövers abzuwenden. Diese Informationen können auch von einem autonom agierenden System verwendet werden, um die drohende Kollision oder die weitere Annäherung zu vermeiden (z.B. durch autonom ausgeführte Ausweichbewegungen).

Ausführungsbeispiele können unter anderem bei Luftfahrzeugen, Landfahrzeugen, aber auch bei Wasserfahrzeugen eingesetzt werden. Zusätzlich können Ausführungsbeispiele zur Überprüfung der Kommunikation und Sensorik eingesetzt werden.

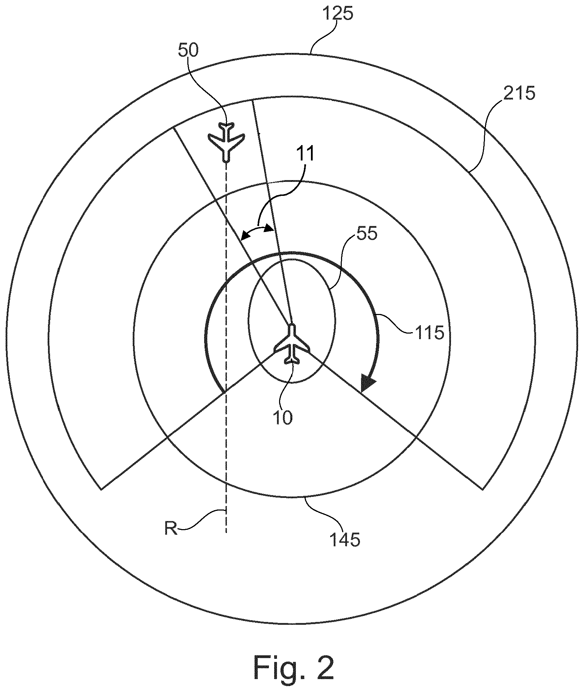

**Fig. 2** veranschaulicht die Arbeitsweise von Ausführungsbeispielen mit weiteren optionalen Details. Bei dem gezeigten Ausführungsbeispiel handelt es sich beispielhaft um ein System, welches auf einem eigenen Fahrzeug 10 (z.B. Flugzeug) installiert und in der Lage ist, einen Verkehrsteilnehmer 50 (z.B. ein anderes Flugzeug), der sich auf einer Trajektorie R bewegt, zu detektieren. Die Detektionsvorrichtung ist auf dem eigenen Fahrzeug 10 installiert und scannt periodisch den ersten Detektionsbereich 115, zum Beispiel mit einem Radar. Innerhalb des ersten Detektionsbereichs 115 befindet sich der größte Teil des Kollisionsvermeidungsbereichs 55, für den auf jeden Fall sichergestellt werden soll, dass ein eindringender Verkehrsteilnehmer 50 in diesem Bereich zuverlässig detektiert wird, sodass rechtzeitig Ausweichmanöver initiiert werden können.

Um rechtzeitig auf solch einen Verkehrsteilnehmer 50 hingewiesen zu werden, wird innerhalb des zweiten Detektionsbereichs 125 der Verkehrsteilnehmer 50 durch die zweite Detektionseinrichtung 120 (z.B. ein ADS-B-System) erfasst. Dieses zweite Detektionseinrichtung 120 kann einen kooperativen Sensor beinhalten, welcher Informationen von dem Verkehrsteilnehmer 50 erhält, die es erlauben, die Position des Verkehrsteilnehmers 50 oder zumindest die Einweisungsrichtung zu dem Verkehrsteilnehmer 50 zu erfassen und diese an die erste Detektionseinrichtung 110 in dem eigenen Fahrzeug 10 weiterzugeben.

Außerdem umfasst das Ausführungsbeispiel der Fig. 2 beispielhaft weitere Sensoren 141, die einen weiteren Detektionsbereich 145 erfassen können. Dieser weitere Detektionsbereich 145 kann beispielsweise über ein Transpondersystem, welches sich im Verkehrsteilnehmer 50 befindet, abgedeckt werden. Diese weiteren Sensoren (z.B. ein FLARM oder ein optisches System) können ebenfalls Teil der zweiten Detektionseinrichtung 120 sein, d.h. die zweite Detektionseinrichtung 120 braucht nicht (kann aber) in sich abgeschlossen sein. Sie kann eine Vielzahl von Sensoren umfassen, die an verschieden Position angeordnet sind und mehr oder weniger autark arbeiten können.

Die Einweisung des beispielhaften Radar-Systems 110 auf die Richtung oder die Position des Verkehrsteilnehmers 50 durch die zweite Detektionseinrichtung 120 umfasst beispielsweise Daten, die den Winkelbereich 11 angeben, so dass die beispielhafte Radar-Anlage 110 in der Lage ist, ebenfalls den eindringenden Verkehrsteilnehmer 50 zu erfassen. Diese richtungsabhängige Radar-Erfassung erlaubt es, einen erweiterten ersten Detektionsbereich 215 abzudecken, in welchem der Verkehrsteilnehmer 50 durch das Radar-System 110 erfasst werden kann.

Der Überwachungsbereich (erste Detektionsbereich 115) des Radars umfasst den oder Teile des Kollisionsvermeidungsbereichs 55 ("collision avoidance zone"). Gemäß Ausführungsbeispielen kann dieser Radar-Bereich 115 jedoch deutlich über den Kollisionsvermeidungsbereich 55 hinaus auf den erweiterten ersten Detektionsbereich 215 ausgedehnt werden ("cued search"). Das beispielhafte ADS-B-System 121 erlaubt beispielweise eine sehr große Reichweite, die Entfernungen bis zu beispielsweise 150 nautische Meilen bzw. 277 km umfassen kann. Das Transponder-System als weiterer Sensor hat eine beispielhafte Reichweite von ca. 26 km (im A- oder C-Modus). Das beispielhafte Radar hat eine Reichweite von beispielsweise 10 km, kann jedoch durch Einweisung über das beispielhafte ADS-B-System hinaus ausgedehnt werden. Zum Beispiel kann der erwähnte erweiterte erste Detektionsbereich 215 den ersten Detektionsbereich 115 in dem Winkelbereich 11 um ein Vielfaches (z.B. 2-fach, 3-fach, 4-fach,...) ausdehnen oder überragen.

Falls das Radar über eine automatische Zielverfolgung verfügt, braucht es im Idealfall nur einmal in dieser Weise auf ein bestimmtes Fahrzeug 50 eingewiesen werden. Es übernimmt dann selbständig innerhalb des gesamten Radar-Abdeckungsbereichs die Verfolgung des Fahrzeugs 50 für zukünftige Erfassungszyklen - auch wenn sich das Fahrzeug 50 außerhalb des Überwachungsbereichs (ersten Detektionsbereiches 115) befindet.

Außerdem erlauben Ausführungsbeispiele, dass nach einer Bestätigung der Position und der Geschwindigkeit des sich nähernden Fahrzeugs 50 durch das Radar, bei Bedarf sofort ein Manöver zur Wiederherstellung der Abstände (Separation) zwischen beiden Fahrzeugen 10, 50, entsprechend der gültigen Verkehrsregeln, (autonom) eingeleitet wird. Das erhöht deutlich die Sicherheit, da unter Umständen viele Fahrzeuge zu berücksichtigen sind, deren frühestmögliche Erfassung große Sicherheitsvorteile bietet.

Ausführungsbeispiele können insbesondere wie folgt umgesetzt werden:
- als Erweiterungsmodul für ein bestehendes Kollisionsvermeidungssystem oder
- als ein vollständig in das Kollisionsvermeidungssystem integriertes Modul.

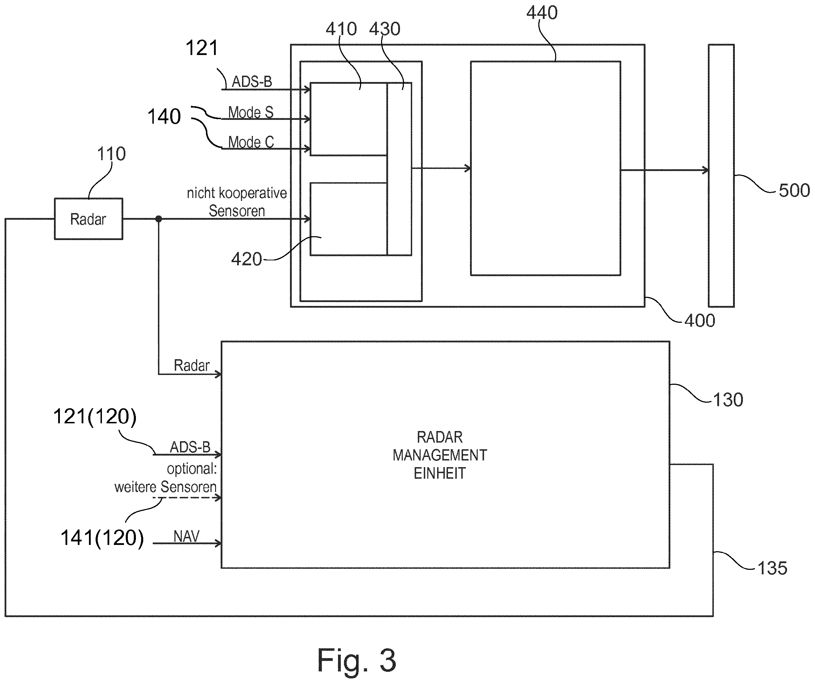

**Fig. 3** zeigt ein Ausführungsbeispiel für das Radar-Steuerungs- und -kollisionsvermeidungssystem, welches beispielhaft das ACAS Xu-System 400 für Luftfahrzeuge und eine Radar-Managementeinheit 130 umfasst. In dem gezeigten Ausführungsbeispiel ist die erste Detektionseinrichtung 110 eine Radar-Anlage, die als nicht-kooperativer Sensor entsprechende Sensorsignale an das ACAS Xu-System 400 und an die Radar-Managementeinheit 130 (RME) übermittelt. Außerdem erhält das ACAS Xu-System 400 Sensorsignale von dem beispielhaften ADS-B-System 121 als Teil der zweiten Detektionseinrichtung und von einem Transpondersystem 140, welches als weiterer kooperativer Sensor vorhanden sein kann.

Das System 400 umfasst eine Auswerteeinheit 410 für kooperative Sensoren, die die Sensorsignale der kooperativen Sensoren 121, 140 empfängt und auswertet. Außerdem umfasst das System 400 eine weitere Auswerteeinheit 420 für nicht-kooperative Sensoren, wobei die Radar-Signale als nicht kooperative Sensorsignale an diese Einheit übermittelt werden. Außerdem umfasst das System 400 eine Korrelationsverarbeitungseinheit 430, die basierend auf den Sensorsignalen der kooperativen Sensoren 121, 140 und der nicht-kooperativen Sensoren 110 Trajektorien R der Verkehrsteilnehmer ermittelt und an eine Berechnungseinheit 440 weitergibt. Die Berechnungseinheit 440 wertet die ermittelten Pfade hinsichtlich möglicher vertikaler Kollisionen als auch horizontaler Kollisionen aus und gibt Anweisungen aus, wie potentielle Kollisionen vermieden werden können bzw. ob überhaupt potentielle Kollisionsgefahr besteht. Diese Ergebnisse können über eine (optische oder akustische) Anzeige 500 an den beispielhaften Piloten oder den Fahrzeugführer ausgegeben werden. Zusätzlich besteht die Möglichkeit, die berechneten Kollisionsvermeidungsmanöver durch den Autopiloten durchführen zu lassen.

In dem Ausführungsbeispiel der Fig. 3 werden die Radar-Signale ebenfalls in der Radar-Managementeinheit 130 zusammen mit den Sensorsignalen der Sensoren 121, 141 übermittelt. Die Sensoren 121, 141 übermitteln die Position oder zumindest die Einweisungsrichtung zum Verkehrsteilnehmer 50. Über eine Rückkopplung 135 an die Radar-Anlage 110 kann eine Einweisung der Radar-Anlage 110 durchgeführt werden, um den Winkelbereich 11 für den erweiterten ersten Detektionsbereich 215 zu erfassen (siehe Fig. 2).

Das Kollisionsvermeidungssystem 400 empfängt somit Daten vom ADS-B 121, einem Transponder 140 (Mode S und Mode C) und einem nicht-kooperativen Sensor 110, sodass basierend auf diesen Daten der beispielhafte Pilot mittels eines entsprechenden Verkehrslagebildes informiert und falls nötig akustisch gewarnt werden kann. Außerdem werden entsprechende Kollisionsvermeidungsmanöver durch die Berechnungseinheit 440 berechnet und bei Bedarf an den Autopiloten weitergegeben. Beispielhaft kann als nicht-kooperativer Sensor 110 ein AESA-Radar eingesetzt werden, das erlaubt, mittels der Radar Managementeinheit 130 das Radar selektiv auf detektierte Fahrzeuge 50 einzuweisen.

Da das Radar 110 den Kollisionsvermeidungsbereich 55 selbständig überwacht, um alle nicht-kooperativen Fahrzeuge zuverlässig erfassen zu können, braucht es nur auf Ziele 50 außerhalb des Kollisionsvermeidungsbereichs 55 eingewiesen zu werden (siehe Fig. 2). Optional kann zur Erhöhung der Positionsgenauigkeit eine Einweisung ebenfalls auf Ziele 50 im Kollisionsvermeidungsbereich 55 erfolgen.

Bei weiteren Ausführungsbeispielen wird kein ADS-B-Empfänger genutzt, sondem ein anderer Sensor und/oder zusätzliche Sensoren 141 genutzt, die gleiche oder vergleichbare Funktionen bereitstellen, aber auch nicht-kooperativ sein können.

Außerdem können NAV-Daten an die Radar-Managementeinheit 130 übermittelt werden. Diese NAV-Daten, d.h. Navigationsdaten, beinhalten beispielsweise Positions- und Zustandsangaben zum eigenen Fahrzeug 10 (z.B. der Längengrad, der Breitengrad, die barometrische Höhe, die Global Positioning System (GPS) Höhe, die Vertikalgeschwindigkeit, ...). Mit Hilfe dieser Angaben erfolgt die Umrechnung der Koordinatensysteme der Sensordaten: Typischerweise werden Radar-Daten relativ zum eigenen Fahrzeug 10 angegeben. ADS-B-Daten werden hingegen im absoluten Koordinatensystem Längengrad/Breitengrad/Höhe ermittelt. Sollen diese beiden Sensoren miteinander verglichen werden, ist die Kenntnis der Position des eigenen Fahrzeugs 10 erforderlich. Mit Hilfe der Geschwindigkeitsinformation des eigenen Fahrzeuges 10 kann eine bessere Genauigkeit erzielt werden.

Des Weiteren wird die Fluglage des eigenen Fahrzeuges 10 benötigt um eine Koordinatentransformation für die flugzeugfesten Radardaten durchzuführen, z.B. der Rollwinkel oder Schiebewinkel des Flugzeugs.

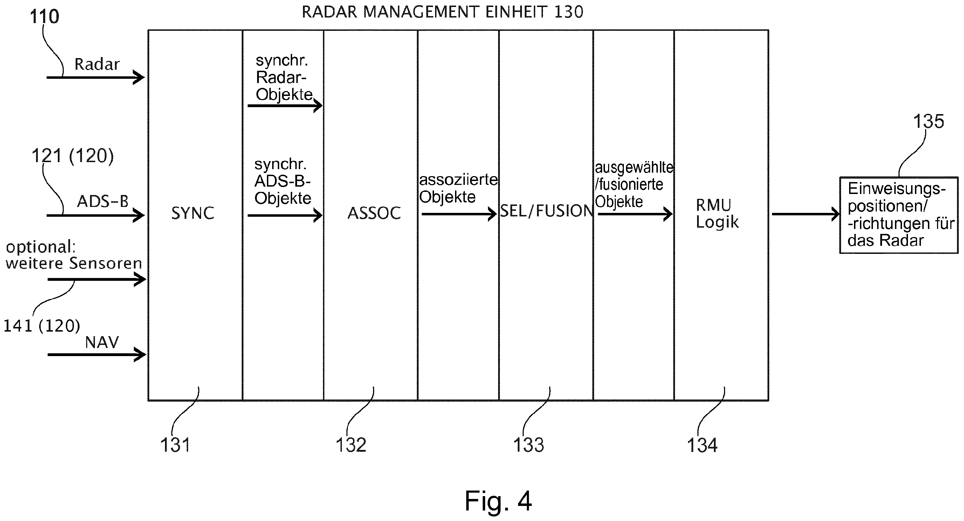

**Fig. 4** zeigt weitere Details der Radar-Managementeinheit 130. Die Radar-Managementeinheit 130 umfasst beispielhaft ein Synchronisationsmodul 131, ein Assoziierungsmodul 132, ein Auswählmodul 133 und eine Verarbeitungseinheit (RME-Logik) 134. Das Synchronisationsmodul 131 empfängt zunächst die Sensorsignale von der beispielhaften Radar-Einheit 110, dem ADS-B Sensor 121, weiteren optionalen Sensoren 141 und NAV-Daten.

Das Synchronisationsmodul 131 überführt zuerst alle Sensordaten in ein gemeinsames Koordinatensystem und synchronisiert anschließend die empfangenen Signale (von einem oder mehreren Sensoren), um sie dadurch einem Objekt bzw. einem Verkehrsteilnehmer 50 zuordnen zu können. Die Zuordnung erfolgt über das Assoziierungsmodul 132, welches beispielsweise die synchronisierten Radar-Signale und die synchronisierten ADS-B-Signale empfängt und die verschiedenen Sensorsignale den einzelnen Objekten 50 zuordnet. Die zugeordneten Objekte 50 werden an das Selektionsmodul 133 ausgegeben, welches entscheidet, welche Objekte 50 genauer zu untersuchen sind, wenn sie beispielsweise noch nicht erfasst wurden und einen Kurs haben, der eine potentielle Gefahr (z.B. eine potentielle Kollision) verursachen könnte. Die ausgewählten Objekte werden in der Verarbeitungslogik 134 entsprechend genauer untersucht. Die Verarbeitungslogik 134 ermittelt beispielsweise Objektpositionsdaten oder zumindest Richtungen zu den Objekten 50, um basierend darauf Einweisungsdaten an das Radar 110 weiterzuleiten (über die Rückkopplung 135 in Fig. 3). Diese Positionsdaten können auch den Winkelabschnitt 11 identifizieren, der gezielt erfasst werden soll.

Somit führt die Radar-Managementeinheit 130 nacheinander die folgenden Schritte aus:
1) "SYNC": Eingehende Sensordaten werden im Allgemeinen asynchron von den Sensoren ausgegeben. Sie werden daher zuerst zeitlich synchronisiert. Dies kann mit einem Kalman-Filter, einer einfachen zeitlichen Extrapolationen oder anderen Techniken realisiert werden.
2) "ASSOC": Die sogenannte Assoziation identifiziert einzelne Luftfahrzeuge oder andere Fahrzeuge in den Sensordaten. Es kann hierdurch beispielsweise festgestellt werden, ob ein vom ADS-B-Empfänger oder anderen Sensoren gemeldetes Luftfahrzeug/Fahrzeug schon vom Radar erfasst wurde. Alle möglichen übereinstimmenden Sensordatensätze werden in einer Datenbank entsprechend markiert.
   Identische Positionen und Geschwindigkeiten können z.B. per Mahalanobis-Distanz unter Berücksichtigung der statistischen Kovarianzen identifiziert werden (die inverse Kovarianzmatrix dient als statistische Abstandsmetrik). Falls mehrere Fahrzeuge für einen Sensor gefunden werden, die das Mahalanobis-Kriterium erfüllen (z.B. Mahalanobis-Distanz kleiner als ein Schwellwert), wird sich für eines dieser Fahrzeuge davon entschieden. Diese Entscheidung kann beispielsweise basierend auf einer Nearest-Neighbour-Heuristik erfolgen, gemäß welcher sich der Algorithmus für den Datensatz mit der kleinsten Mahalanobis-Distanz entscheidet.
   Es können aber auch andere Verfahren statt das oben beispielhaft beschriebene auf der Mahalanobis-Distanz basierende Verfahren verwendet werden.
3) "SEL/FUSION": Eine Selektion oder Datenfusion kann bei einer Einweisung des Radars auf eine Position erfolgen, die auf mindestens zwei Sensoren basiert. Zur Veranschaulichung dieses Falles wurde in der Fig. 4 neben dem ADS-B Eingang 121 ein optionaler weiterer Sensor 141 angedeutet, d.h. ohne diesen optionalen weiteren Sensor könnte die Selektion oder Datenfusion entfallen. Bei der Selektion wird für jedes zu untersuchende Fahrzeug 50 einer der Sensoren zur Einweisung ausgewählt. Im Falle der Fusion erfolgt jeweils eine algorithmische Zusammenführung der Einweisungs-Position.
4) "RME Logik": Hier wird festgelegt welche Ziele vom Radar selektiv angestrahlt werden sollen. Diese Routine wird im folgenden Kapitel erläutert.

Die Bestimmung der einzuweisenden Radar-Ziele kann mittels RME-Logik 134 wie folgt erfolgen. Wie bereits beschrieben, erstellt der ASSOC-Block 132 laufend die komplette Liste der assoziierten Fahrzeuge. Nach einer eventuellen Selektion oder Fusion führt die RME-Logik-Einheit 134 danach die folgenden Schritte durch:
a) Ermittlung der Kandidatenliste für die selektiv anzustrahlenden Radar-Ziele 50,
b) Bewertung jedes Elements der Kandidatenliste mit einer Kostenfunktion (oder Verarbeitung von Kostenwerten, die außerhalb der RME-Logik 134 berechnet wurden),
c) Sortieren der Kandidatenliste nach dem ermittelten Kostenwert,
d) Weitergabe der maximal NSEL Elemente (z.B. 2, 3, 4, 5, ...) der sortierten Kandidatenliste an das Radar.

Der Parameter NSEL ist abhängig von der verfügbaren Performance des Radars für die "cued search". Er limitiert die Anzahl der einzuweisenden Radar-Ziele.

Bei der Anwendung der Kostenfunktion im Schritt b) auf die Kandidatenliste werden beispielsweise nur diejenigen Elemente berücksichtigt, welche
A) von mindestens einem verwendeten Sensor detektiert worden sind und/oder
B) noch nicht durch das Radar bestätigt wurden und/oder
C) mittels eingewiesenem Radar detektierbar waren/sind.

Des Weiteren kann die Kostenfunktion die in dieser Weise selektierten Elemente priorisieren, so dass
- weiter entfernte Luftfahrzeuge bzw. Luftfahrzeuge mit einem geringeren Kollisionspotential eine niedrigere Priorität zugewiesen bekommen, und/oder
- bei einer größeren Anzahl an erfolglosen Versuchen, die ADS-B Positionen und die Mode S oder Mode C Daten durch das Radar zu bestätigen, eine niedrigere Priorität resultiert.

Gemäß dieser Priorisierung wird die Liste oder Datenbank sortiert und es werden die NSEL Elemente mit der höchsten Priorität an das Radar 110 weitergegeben.

Ausführungsbeispiele nutzen somit zusätzlich detektierte Ziele, wobei die gewonnenen zusätzlichen Positions-, Geschwindigkeits-, und Beschleunigungsinformationen verwendet werden, um:
- den Überwachungsbereich 115 eines bestehenden Kollisionsvermeidungssystems 400 wie z.B. ACAS Xu (siehe Fig. 3) zu erweitern,
- ein neues, integriertes Kollisionsvermeidungssystem zu realisieren, das einen erweiterten Kollisionsvermeidungsbereich 215 hat und optional eine Funktion zur Einhaltung der definierten Mindestwerte für die Staffelungsabstände zwischen den Fahrzeugen zur Verfügung stellt,
- ein erweitertes Lagebild für den Fahrzeugführer zu erstellen,
- eine Indikation für manipulierte oder falsche kooperative Sensordaten zu erstellen. Diese Indikation kann sowohl von einem Fahrzeugführer, wie auch von automatischen Überwachungs- / Ausweichsystemen benutzt werden. Manipulierte oder falsche kooperative Sensordaten liegen vor, wenn in dem erweiterten Radar-Überwachungsbereich 215 die kooperativen Sensordaten (Position, Geschwindigkeit, ...) nicht bestätigt werden können,
- eine Indikation für ungenaue Sensordaten der zweiten Detektionseinrichtung 120 zu erhalten, falls diese nicht-kooperative Sensoren aufweist.

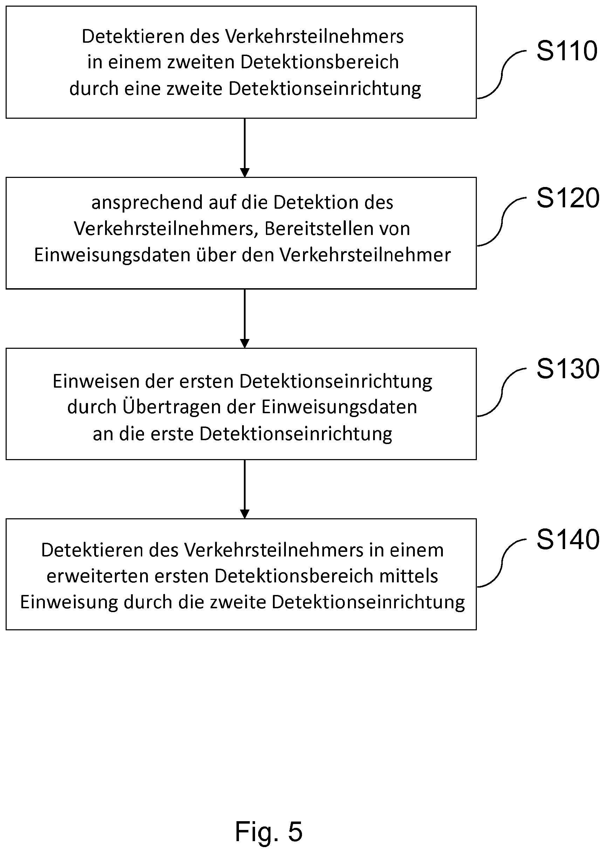

**Fig. 5** zeigt ein Flussdiagramm für ein Verfahren zur Detektion eines Verkehrsteilnehmers 50 mit einer Detektionsvorrichtung, die eine erste und eine zweite Detektionseinrichtung 110, 120 umfasst, wobei die erste Detektionseinrichtung 110 in der Lage ist, einen ersten Detektionsbereich 115 wiederholend zu erfassen und ein Eindringen des Verkehrsteilnehmers 50 in den ersten Detektionsbereich 115 zu detektieren. Das Verfahren umfasst die Schritte:
- Detektieren S110 des Verkehrsteilnehmers 50 in einem zweiten Detektionsbereich 125 durch eine zweite Detektionseinrichtung 120;
- ansprechend auf die Detektion des Verkehrsteilnehmers 50, Bereitstellen S120 von Einweisungsdaten über den Verkehrsteilnehmer 50;
- Einweisen S130 der ersten Detektionseinrichtung 110 durch Übertragen der Einweisungsdaten an die erste Detektionseinrichtung 110; und
- Detektieren S140 des Verkehrsteilnehmers 50 in einem erweiterten ersten Detektionsbereich 215 mittels Einweisung durch die zweite Detektionseinrichtung 120,
sodass der Verkehrsteilnehmer 50 vor dem Eindringen in dem ersten Detektionsbereich (115) durch die erste Detektionseinrichtung (110) erfassbar ist.

Das Verfahren kann ebenfalls Computer-implementiert sein, d.h. es kann durch Anweisungen umgesetzt sein, die auf einem Speichermedium gespeichert sind und in der Lage sind, die Schritte des Verfahrens auszuführen, wenn es auf einem Prozessor läuft. Die Anweisungen umfassen typischerweise eine oder mehrere Anweisungen, die auf unterschiedliche Art auf unterschiedlichen Medien in oder peripher zu einer Steuereinheit (mit einem Prozessor) gespeichert sein können, die, wenn sie gelesen und durch die Steuereinheit ausgeführt werden, die Steuereinheit dazu veranlassen, Funktionen, Funktionalitäten und Operationen auszuführen, die zum Ausführen eines Verfahrens gemäß der vorliegenden Erfindung notwendig sind.

Die in der Beschreibung, den Ansprüchen und den Figuren offenbarten Merkmale der Erfindung können sowohl einzeln als auch in beliebiger Kombination für die Verwirklichung der Erfindung wesentlich sein.

### Bezugszeichenliste

- R: Trajektorie eines Verkehrsteilnehmers
- 10: eigenes Fahrzeug
- 11: Winkelabschnitt für Einweisung
- 50: Verkehrsteilnehmer
- 55: Kollisionsvermeidungsbereich
- 110: erste Detektionseinrichtung (z.B. Radar)
- 115: erster Detektionsbereich
- 120: zweite Detektionseinrichtung (z.B. ADS-B)
- 121: ADS-B Sensor
- 125: zweiter Detektionsbereich
- 130: Steuereinheit (z.B. Radar-Managementeinheit)
- 131: Synchronisationsmodul
- 132: Assoziierungsmodul
- 133: Auswählmodul
- 134: Verarbeitungseinheit
- 135: Rückkopplung
- 140: Transponder
- 141: zusätzliche Sensoren
- 145: zusätzlicher Sensorbereich
- 215: erweiterter erster Detektionsbereich
- 400: Kollisionsvermeidungssystem
- 410: Auswerteeinheit für kooperative Sensoren
- 420: weitere Auswerteeinheit für nicht-kooperative Sensoren
- 430: Korrelationsverarbeitungseinheit
- 440: Berechnungseinheit
- 500: Kollisionsvermeidungsmanöver

## Patentansprüche

1. Vorrichtung zur Detektion eines oder mehrerer Verkehrsteilnehmer(s) (50) mit:
einer ersten Detektionseinrichtung (110) zum Detektieren des Verkehrsteilnehmers (50) in einem ersten Detektionsbereich (115);
einer zweiten Detektionseinrichtung (120) zum Detektieren des Verkehrsteilnehmers (50) in einem zweiten Detektionsbereich (125),
wobei die erste Detektionseinrichtung (110) ausgebildet ist:
(i) den ersten Detektionsbereich (115) wiederholend zu erfassen und ein Eindringen des Verkehrsteilnehmers (50) in den ersten Detektionsbereich (115) zu detektieren, und
(ii) auf eine Einweisung in einen Winkelabschnitt (11) über den ersten Detektionsbereich (115) hinaus in einem erweiterten ersten Detektionsbereich (215) den Verkehrsteilnehmer (50) zu erfassen; und
die zweite Detektionseinrichtung (120) zumindest einen kooperativen Sensor umfasst, der ausgebildet ist, um eine Position oder eine Einweisungsrichtung des Verkehrsteilnehmers (50) basierend auf Daten zu erfassen, die von dem Verkehrsteilnehmer (50) ausgesandt werden, und
die zweite Detektionseinrichtung (120) ausgebildet ist, um ansprechend auf die Detektion des Verkehrsteilnehmers (50) für die Einweisung erforderliche Daten über den Verkehrsteilnehmer (50) bereitzustellen und an die erste Detektionseinrichtung (110) zur Einweisung zu übermitteln, so dass der Verkehrsteilnehmer (50) vor dem Eindringen in dem ersten Detektionsbereich (115) durch die erste Detektionseinrichtung (110) erfassbar ist.

2. Vorrichtung nach Anspruch 1, wobei die zur Einweisung genutzten Daten eine Einweisungsrichtung zum Verkehrsteilnehmer (50) oder eine Position des Verkehrsteilnehmers (50) anzeigen und der Winkelabschnitt (11) derart gewählt ist, dass die Richtung oder die Position in dem Winkelabschnitt (11) liegt, wobei der Verkehrsteilnehmer (50) sich außerhalb von dem ersten Detektionsbereich (115) befindet.

3. Vorrichtung nach einem der vorhergehenden Ansprüche, wobei die erste Detektionseinrichtung (110) und/oder die zweite Detektionseinrichtung (120) zumindest einen nicht-kooperativen Sensor umfasst, der ausgebildet ist, den Verkehrsteilnehmer (50) unabhängig davon zu detektieren, ob der Verkehrsteilnehmer (50) Daten aussendet.

4. Vorrichtung nach einem der vorhergehenden Ansprüche, wobei die erste Detektionseinrichtung (110) einen Radar mit elektronischer Strahlschwenkung umfasst, das ausgebildet ist, den Verkehrsteilnehmer (50) unabhängig davon zu detektieren, ob der Verkehrsteilnehmer (50) Daten aussendet.

5. Vorrichtung nach einem der vorhergehenden Ansprüche, die weiter eine Steuereinheit (130) umfasst, die ausgebildet ist, um zumindest eine der folgenden Funktionen bereitzustellen:
- Detektionssignale der ersten Detektionseinrichtung (110) und/oder der zweiten Detektionseinrichtung (120) zeitlich zu synchronisieren,
- Zuordnen von Verkehrsteilnehmern (50) zu den erfassten Detektionssignalen,
- eine Selektion oder eine Datenfusion der zur Einweisung genutzten Daten, wenn die zweite Detektionseinrichtung (120) zumindest zwei Sensoren (121, 141) umfasst, die Sensordaten liefern,
- Auswählen von Verkehrsteilnehmern (50), die selektiv durch die erste Detektionseinrichtung (110) in dem begrenzten Winkelabschnitt (11) zu erfassen sind.

6. Vorrichtung nach Anspruch 5, wobei die Steuereinheit (130) weiter ausgebildet ist, um eine Bestimmung von einzuweisenden Kandidaten-Verkehrsteilnehmern (50) durchzuführen, wobei das Bestimmen zumindest eines aus dem Folgenden umfasst:
- Ermittlung einer Kandidatenliste für selektiv einzuweisende Kandidaten,
- Bewertung jedes Elementes aus der Kandidatenliste mit einer Kostenfunktion,
- Sortieren der Kandidatenliste basierend auf der Bewertung,
- Weitergabe, der durch die Kostenfunktion am stärksten gewichteten Kandidaten an die erste Detektionseinrichtung (110), um dort eine Einweisung auf die am stärksten gewichteten Kandidaten vorzunehmen.

7. Vorrichtung nach einem der vorhergehenden Ansprüche, die weiter eine Warneinrichtung umfasst, die ausgebildet ist, um einen durch die erste Detektionseinrichtung (110) erfassten Verkehrsteilnehmer (50) in dem erweiterten ersten Detektionsbereich durch Ausgeben einer Warnung anzuzeigen.

8. Vorrichtung nach Anspruch 7, wobei die Warneinrichtung eine Anzeige umfasst, die ausgebildet ist, um den Verkehrsteilnehmer (50) bei einer Detektion in dem erweiterten ersten Detektionsbereich darzustellen.

9. Kollisionsvermeidungssystem (400) mit einer Vorrichtung nach einem der Ansprüche 1 bis 8.

10. Kollisionsvermeidungssystem (400) nach Anspruch 9, wobei der Verkehrsteilnehmer (50) ein Luftfahrzeug, ein Wasserfahrzeug oder ein Landfahrzeug ist und das Kollisionsvermeidungssystem basierend auf der Detektion Alternativrouten vorschlägt und/oder autonom einleitet.

11. Verfahren zur Detektion eines Verkehrsteilnehmers (50) mit einer Detektionsvorrichtung, die eine erste und eine zweite Detektionseinrichtung (110, 120) umfasst, wobei die erste Detektionseinrichtung (110) in der Lage ist, einen ersten Detektionsbereich (115) wiederholend zu erfassen und ein Eindringen des Verkehrsteilnehmers (50) in den ersten Detektionsbereich (115) zu detektieren, wobei das Verfahren die folgenden Schritte umfasst:
Detektieren (S110) des Verkehrsteilnehmers (50) in einem zweiten Detektionsbereich (125) durch eine zweite Detektionseinrichtung (120), wobei die zweite Detektionseinrichtung (120) zumindest einen kooperativen Sensor umfasst, der ausgebildet ist, um eine Position oder eine Einweisungsrichtung des Verkehrsteilnehmers (50) basierend auf Daten zu erfassen, die von dem Verkehrsteilnehmer (50) ausgesandt werden;
ansprechend auf die Detektion des Verkehrsteilnehmers (50), Bereitstellen (S120) von Einweisungsdaten über den Verkehrsteilnehmer (50); und Einweisen (S130) der ersten Detektionseinrichtung (110) durch Übertragen der Einweisungsdaten an die erste Detektionseinrichtung (110);
und
ansprechend auf die Einweisung, Detektieren (S140) des Verkehrsteilnehmers (50) durch die erste Detektionseinrichtung (110) über den ersten Detektionsbereich (115) hinaus in einem erweiterten ersten Detektionsbereich (215),
sodass der Verkehrsteilnehmer (50) vor dem Eindringen in den ersten Detektionsbereich (115) durch die erste Detektionseinrichtung (110) erfassbar ist.

12. Verfahren nach Anspruch 11, das weiter zumindest einen der folgenden Schritte umfasst:
- Synchronisieren der Detektionssignale von der ersten Detektionseinrichtung (110) und/oder von der zweiten Detektionseinrichtung (120),
- Zuordnen von Verkehrsteilnehmern (50) zu den erfassten Detektionssignalen,
- wenn die zweite Detektionseinrichtung (120) zumindest zwei Sensoren umfasst, die Detektionsdaten liefern, Auswählen und/oder Vereinen der zur Einweisung genutzten Daten;
- Auswählen von Verkehrsteilnehmern (50), die selektiv durch die erste Detektionseinrichtung (110) in einem begrenzten Winkelabschnitt (11) zu erfassen sind.

13. Verfahren nach Anspruch 11 oder Anspruch 12, das weiter zumindest einen der folgenden Schritte umfasst:
- Erstellen einer Kandidatenliste für selektiv einzuweisende Kandidaten von Verkehrsteilnehmern (50),
- Bewerten jedes Elementes aus der Kandidatenliste mit einer Kostenfunktion,
- Sortieren der Kandidatenliste basierend auf der Bewertung,
- Weitergeben, der durch die Kostenfunktion am stärksten gewichteten Kandidaten an die erste Detektionseinrichtung (110), um dort eine Einweisung auf diese Verkehrsteilnehmer (50) vorzunehmen.

14. Computerprogrammprodukt mit darauf gespeicherter Software, die ausgebildet ist, um das Verfahren nach einem der Ansprüche 11 bis 13 auszuführen, wenn die Software auf einer Datenverarbeitungseinheit ausgeführt wird.

## Claims

1. Apparatus for detecting one or more traffic participants (50), comprising:
a first detection device (110) for detecting the traffic participant (50) in a first detection region (115);
a second detection device (120) for detecting the traffic participant (50) in a second detection region (125),
wherein the first detection device (110) is designed to:
(i) repeatedly scan the first detection region (115) and detect an entry of the traffic participant (50) into the first detection region (115), and
(ii) in the case of an instruction into an angular portion (11) beyond the first detection region (115), detect the traffic participant (50) in an extended first detection region (215); and
the second detection device (120) comprises at least one cooperative sensor which is designed to detect a position or an instruction direction of the traffic participant (50) based on data transmitted by the traffic participant (50), and
the second detection device (120), in response to the detection of the traffic participant (50), is designed to provide data regarding the traffic participant (50) that are required for the instruction and to transmit said data to the first detection device (110) for instruction, such that the traffic participant (50) can be detected by the first detection device (110) before entering the first detection region (115).

2. Apparatus according to claim 1, wherein the data used for instruction indicate an instruction direction toward the traffic participant (50) or a position of the traffic participant (50), and the angular portion (11) is selected such that the direction or the position is in the angular portion (11), wherein the traffic participant (50) is located outside the first detection region (115).

3. Apparatus according to either of the preceding claims, wherein the first detection device (110) and/or the second detection device (120) comprises at least one non-cooperative sensor which is designed to detect the traffic participant (50) regardless of whether the traffic participant (50) transmits data.

4. Apparatus according to any of the preceding claims, wherein the first detection device (110) comprises a radar having electronic beam scanning, which is designed to detect the traffic participant (50) regardless of whether the traffic participant (50) transmits data.

5. Apparatus according to any of the preceding claims, further comprising a control unit (130) which is designed to provide at least one of the following functions:
- temporally synchronizing detection signals of the first detection device (110) and/or the second detection device (120),
- allocating traffic participants (50) to the detected detection signals,
- providing a selection or a data fusion of the data used for instruction if the second detection device (120) comprises at least two sensors (121, 141) that supply sensor data,
- selecting traffic participants (50) that are to be detected selectively by the first detection device (110) in the limited angular portion (11).

6. Apparatus according to claim 5, wherein the control unit (130) is further designed to carry out a determination of candidate traffic participants (50) with regard to which an instruction is to be performed, wherein the determination comprises at least one of the following:
- establishing a candidate list for candidates with regard to which an instruction is to be selectively performed,
- evaluating each element from the candidate list using a cost function,
- sorting the candidate list based on the evaluation,
- forwarding the candidates weighted most strongly by the cost function to the first detection device (110) in order to carry out an instruction with regard to the most strongly weighted candidates there.

7. Apparatus according to any of the preceding claims, further comprising a warning device that is designed to display a traffic participant (50) detected by the first detection device (110) in the extended first detection region (215) by outputting a warning.

8. Apparatus according to claim 7, wherein the warning device comprises a display which is designed to display the traffic participant (50) in the case of detection in the extended first detection region (215).

9. Collision avoidance system (400) having an apparatus according to any of claims 1 to 8.

10. Collision avoidance system (400) according to claim 9, wherein the traffic participant (50) is an aircraft, a watercraft or a land vehicle and the collision avoidance system proposes alternative routes based on the detection and/or initiates said routes autonomously.

11. Method for detecting a traffic participant (50) using a detection apparatus comprising a first and a second detection device (110, 120), wherein the first detection device (110) is able to repeatedly scan a first detection region (115) and detect an entry of the traffic participant (50) into the first detection region (115), wherein the method comprises the following steps:
detecting (S110) the traffic participant (50) in a second detection region (125) by means of a second detection device (120), wherein the second detection device (120) comprises at least one cooperative sensor which is designed to determine a position or an instruction direction of the traffic participant (50) based on data transmitted by the traffic participant (50);
in response to the detection of the traffic participant (50), providing (S120) instruction data regarding the traffic participant (50); and instructing (S130) the first detection device (110) by transmitting the instruction data to the first detection device (110); and
in response to the instruction, detecting (S140) the traffic participant (50) by means of the first detection device (110) beyond the first detection region (115) in an extended first detection region (215),
such that the traffic participant (50) can be detected by the first detection device (110) before entering the first detection region (115).

12. Method according to claim 11, further comprising at least one of the following steps:
- synchronizing the detection signals from the first detection device (110) and/or from the second detection device (120),
- allocating traffic participants (50) to the detected detection signals,
- if the second detection device (120) comprises at least two sensors that supply detection data, selecting and/or combining the data used for instruction;
- selecting traffic participants (50) that are to be detected selectively by the first detection device (110) in a limited angular portion (11).

13. Method according to either claim 11 or claim 12, further comprising at least one of the following steps:
- creating a candidate list for candidates of traffic participants (50) with regard to which an instruction is to be selectively performed,
- evaluating each element from the candidate list using a cost function,
- sorting the candidate list based on the evaluation,
- forwarding the candidates weighted most strongly by the cost function to the first detection device (110) in order to carry out an instruction with regard to these traffic participants (50) there.

14. Computer program product having software stored thereon that is designed to execute the method according to any of claims 11 to 13 when the software is executed on a data processing unit.

## Revendications

1. Dispositif de détection d'un ou de plusieurs usagers de la route (50) avec :
un premier dispositif de détection (110) pour détecter l'usager de la route (50) dans une première zone de détection (115) ;
un second dispositif de détection (120) pour détecter l'usager de la route (50) dans une second zone de détection (125),
dans lequel le premier dispositif de détection (110) est conçu :
(i) pour détecter de façon répétée la première zone de détection (115) et pour détecter une intrusion de l'usager de la route (50) dans la première zone de détection (115), et
(ii) détecter l'usager de la route (50) dans une première zone de détection étendue (215) sur instruction dans un tronçon angulaire (11) au-delà de la première zone de détection (115) ; et
le second dispositif de détection (120) comprend au moins un capteur coopératif qui est conçu pour détecter une position ou une direction d'instruction de l'usager de la route (50) à partir de données transmises par l'usager de la route (50), et
le second dispositif de détection (120) est conçu pour fournir, en réponse à la détection de l'usager de la route (50), des données sur l'usager de la route (50) nécessaires au placement et les transmettre au premier dispositif de détection (110) pour le placement, de sorte que l'usager de la route (50) puisse être détecté par le premier dispositif de détection (110) avant d'entrer dans la première zone de détection (115).

2. Dispositif selon la revendication 1, dans lequel les données utilisées pour le placement indiquent une direction d'instruction à l'usager de la route (50) ou une position de l'usager de la route (50) et la section d'angle (11) est sélectionnée de sorte que la direction ou la position se trouve dans la section d'angle (11), dans lequel l'usager de la route (50) se trouve à l'extérieur de la première zone de détection (115).

3. Dispositif selon l'une des revendications précédentes, dans lequel le premier dispositif de détection (110) et/ou le second dispositif de détection (120) comprend au moins un capteur non coopératif qui est adapté pour détecter l'usager de la route (50) indépendamment du fait que le l'usager de la route (50) transmette des données.

4. Dispositif selon l'une des revendications précédentes, dans lequel le premier dispositif de détection (110) comprend un radar à balayage de faisceau électronique, qui est conçu pour détecter l'usager de la route (50) indépendamment du fait que l'usager de la route (50) transmette des données.

5. Dispositif selon l'une des revendications précédentes, comprenant en outre une unité de commande (130) qui est conçue pour assurer au moins l'une des fonctions suivantes :
- Synchronisation des signaux de détection du premier dispositif de détection (110) et/ou du second dispositif de détection (120),
- Affectation des usagers de la route (50) aux signaux de détection détectés,
- Sélection ou fusion de données des données utilisées pour l'instruction si le second dispositif de détection (120) comprend au moins deux capteurs (121, 141) fournissant des données de capteurs,
- Sélection des usagers de la route (50) à détecter sélectivement par le premier dispositif de détection (110) dans la section angulaire limitée (11).

6. Dispositif selon la revendication 5, dans lequel l'unité de commande (130) est en outre configurée pour effectuer une détermination d'usagers de la route candidats (50) à instruire, la détermination comprenant au moins l'un des éléments suivants :
- Identification d'une liste de candidats pour les candidats à admettre sélectivement,
- Évaluation de chaque élément de la liste candidate avec une fonction de coût,
- Triage de la liste des candidats en fonction de l'évaluation,
- Passage des candidats les plus pondérés par la fonction de coût au premier dispositif de détection (110) pour y instruire les candidats les plus pondérés.

7. Dispositif selon l'une des revendications précédentes, qui comprend en outre un dispositif d'avertissement qui est conçu pour afficher un usager de la route (50) détecté par le premier dispositif de détection (110) dans la première zone de détection étendue (215) en émettant un avertissement.

8. Dispositif selon la revendication 7, dans lequel le dispositif d'avertissement comprend un affichage destiné à indiquer l'usager de la route (50) lorsqu'il est détecté dans la première zone de détection étendue (215).

9. Système anticollision (400) avec un dispositif selon l'une des revendications 1 à 8.

10. Système anticollision (400) selon la revendication 9, dans lequel l'usager de la route (50) est un aéronef, une embarcation ou un véhicule terrestre et le système anticollision propose des itinéraires alternatifs basés sur la détection et/ou les initie de manière autonome.

11. Procédé de détection d'un usager de la route (50) avec un dispositif de détection comprenant un premier et un second dispositif de détection (110, 120), le premier dispositif de détection (110) étant apte à détecter de manière répétée une première zone de détection (115) et une intrusion de l'usager de la route (50) dans la première zone de détection (115), le procédé comprenant les étapes suivantes :
détection (S110) de l'usager de la route (50) dans une second zone de détection (125) par un second dispositif de détection (120), dans lequel le second dispositif de détection (120) comprend au moins un capteur coopératif qui est conçu pour détecter une position ou une direction d'instruction de l'usager de la route (50) basée sur des données transmises par l'usager de la route (50) ;
en réponse à la détection de l'usager de la route (50), fournir (S120) des données d'instruction concernant l'usager de la route (50) ; et ordonner (S130) au premier dispositif de détection (110) en transmettant les données d'instruction au premier dispositif de détection (110) ; et
en réponse au placement, détection (S140) de l'usager de la route (50) par le premier dispositif de détection (110) au-delà de la première zone de détection (115) dans une première zone de détection étendue (215),
de sorte que l'usager de la route (50) puisse être détecté par le premier dispositif de détection (110) avant d'entrer dans la première zone de détection (115).

12. Procédé selon la revendication 11, comprenant en outre au moins l'une des étapes suivantes :
- Synchronisation des signaux de détection du premier dispositif de détection (110) et/ou du second dispositif de détection (120),
- Affectation des usagers de la route (50) aux signaux de détection détectés,
- si le second dispositif de détection (120) comprend au moins deux capteurs qui fournissent des données de détection, sélectionner et/ou combiner les données utilisées pour l'instruction ;
- Sélection des usagers de la route (50) à détecter sélectivement par le premier dispositif de détection (110) dans une section angulaire limitée (11).

13. Procédé selon la revendication 11 ou 12, comprenant en outre au moins l'une des étapes suivantes :
- Création d'une liste de candidats pour les usagers de la route (50) à admettre sélectivement,
- Évaluation de chaque élément de la liste des candidats avec une fonction de coût,
- Triage de la liste des candidats en fonction de l'évaluation,
- Passage des candidats les plus pondérés par la fonction de coût au premier dispositif de détection (110) afin de les y renseigner sur ces usagers de la route (50).

14. Produit programme informatique sur lequel est stocké un logiciel, lequel est configuré pour exécuter le procédé selon l'une des revendications 11 à 13 lorsque le logiciel est exécuté sur une unité de traitement de données.
